**Europäisches Patentamt**

**European Patent Office**

**Office européen des brevets**

(19)

(11) Publication number: **0 348 923**
**A2**

# EUROPEAN PATENT APPLICATION

(12)

(21) Application number: **89111736.8**

(22) Date of filing: **28.06.89**

(51) Int. Cl.4: **G07F 7/10 , G06F 15/30 , G07D 1/04**

(30) Priority: **30.06.88 JP 163891/88**
**14.07.88 JP 176426/88**
**25.07.88 JP 186486/88**

(43) Date of publication of application:
**03.01.90 Bulletin 90/01**

(84) Designated Contracting States:
**AT BE CH DE ES FR GB GR IT LI NL SE**

(71) Applicant: **OMRON TATEISI ELECTRONICS CO.**
**10, Tsuchido-cho Hanazono Ukyo-ku**
**Kyoto 616(JP)**

(72) Inventor: **Sakazaki, Masato c/o Patent Center Omron Tateisi**
**Electronics Co. 20, Igadera**
**Shimokaiinji Nagaokakyo-shi Kyoto 617(JP)**
Inventor: **Kishimoto, Syuichi c/o Patent Center Omron Tateisi**
**Electronics Co. 20, Igadera**
**Shimokaiinji Nagaokakyo-shi Kyoto 617(JP)**
Inventor: **Tanaka, Kousuke c/o Patent Center Omron Tateisi**
**Electronics Co. 20, Igadera**
**Shimokaiinji Nagaokakyo-shi Kyoto 617(JP)**

(74) Representative: **Kahler, Kurt, Dipl.-Ing.**
**Patentanwälte Kahler & Käck Gerberstrasse**
**3 Postfach 1249**
**D-8948 Mindelheim(DE)**

(54) **Apparatus for exchanging money to valuable papers.**

(57) Apparatus for exchanging money to valuable papers with which the kind and number of traveler's checks are designated, the amount of money to be inserted is calculated on the basis of the preset exchange rate. When the cash of the amount calculated is inserted, the designated traveler's checks are delivered. The calculated amount of money can be also paid by transferring the corresponding amount of money from the bank account by using a card in place of inserting the cash. Peculiar numbers are printed onto the traveler's check to be issued and these numbers and the data of the card used are stored so as to correspond to one another. Thus, the complete automated issueing operation of the traveler's checks can be accomplished.

Fig.9

START — n31

SELECT ENGLISH/JAPANESE GUIDANCES

D — n32

SELECT ENGLISH OR JAPANESE GUIDANCE — n34

SELECT KIND OF TRANSACTION — n33

SELECT TRANSACTION KIND — n36

INPUT NUMBER OF TRAVELER'S CHECKS — n35

INPUT NUMBER OF TCs — n38

CHECK SPECIFICATION OF CALCULATIONS — n37

CONFIRM SPECIFICATION OF CALCULATIONS — n40

INSERT CARD — n39

ACCEPT CARD

ERROR? Y → ERROR PROCESS — n41

INPUT ID NUMBER — n42

INPUT ID NUMBER — n43

COMMUNICATE WITH CENTER — n44

n45 — TRANSACTION OK? N → ERROR PROCESS

Y → C

C

PRINT JOURNAL AND DELIVER TCs — n46

ERROR? Y → ERROR PROCESS — n47

N

PULL OUT CARD — n48

WAIT UNTIL CARD IS PULLED OUT — n49

PULL OUT PARTICULAR — n50

WAIT UNTIL PARTICULAR IS PULLED OUT — n51

TAKE OUT TRAVELER'S CHECKS — n52

WAIT UNTIL TCs ARE TAKEN OUT — n53

THANK YOU

D

n54

1a

## APPARATUS FOR EXCHANGING MONEY TO VALUABLE PAPERS

### BACKGROUND OF THE INVENTION

Field of the Invention

The present invention relates to an apparatus for exchanging money to valuable papers. In the specification, the term "money" denotes a concept including not only the cash but also the savings of a bank account, credit, and the like. On the other hand, the term "valuable papers" denotes a concept including the bills, traveler's checks, merchandise bonds(including beer coupon, book coupon, and the like), securities or stocks and bonds, etc. Therefore, the exchanging apparatus according to the present invention includes: an apparatus for exchanging domestic money to foreign money; an apparatus for mutually exchanging moneys of different countries; an apparatus for exchanging cash to traveler's check; an apparatus for exchanging domestic money to foreign money and traveler's check; an apparatus for exchanging a part of the balance at a bank of the self bank account to money or traveler's check (by using a bank card or a cash card); an apparatus for issuing cash or check by using a credit card by giving credit as security; and the like.

The exchange between the cash and the traveler's checks is generally executed at the window of a bank. To take countermeasures for the loss or theft, the serial numbers (check numbers, issue numbers) are printed one by one to the traveler's checks which are exchanged and these numbers are registered in the bank. The exchanging and registering works are manually executed by the hands of a clerk in accordance with a request based on an application form written by a customer.

Therefore, particularly, in the season of foreign tours, there is a problem such that the customers are in confusion at the windows of the bank and the services deteriorate because it takes a long time to execute the procedures for the customers. There is also a problem such that the processing efficiency is bad because the exchanging works and the registering works of the check numbers are manually performed by the hands of the clerks.

### SUMMARY OF THE INVENTION

It is an object of the present invention to provide an exchanging apparatus which can automatically issue valuable papers and to improve the services and the working efficiency.

Another object of the invention is to provide an exchanging apparatus in which the good services and high working efficiency are obtained by automatically executing the exchange and the check number registration.

An apparatus for exchanging money to valuable papers according to the present invention comprises: valuable papers delivery means for delivering valuable papers of the designated kind and number of papers; paying means for receiving money; conversion rate setting means for setting a conversion rate of the valuable papers and the money; and control means for allowing the delivery means to deliver the designated kind and number of valuable papers in response to the operation such that the money of the amount which is determined on the basis of the designated kind and number of valuable papers and the conversion rate has been received by the paying means.

According to the invention, since the valuable papers, for instance, the traveler's checks are automatically issued by the operation of the customer himself, the number of clerks of the bank can be reduced. On the other hand, by installing a plurality of exchanging apparatuses according to the invention, even if many customers exist, each customer can exchange the valuable papers without waiting for a long time.

In the case where the valuable papers are the traveler's checks, it is sufficient for the bank clerk to execute only the registering process of the check numbers.

The money can be paid not only by the cash but also by using the bank card (cash card) or credit card. When the card is used as mentioned above, the handling of the money of the amount having a fraction of one or two yen can be easily executed and the troublesomeness in the handling is eliminated as compared with the case where the cash is used.

The delivery apparatus of the valuable papers according to the invention is preferably used in the exchanging apparatus.

The delivery apparatus comprises: a plurality of stackers which are arranged in parallel and respectively enclose different kinds of valuable papers such that they can be fed from feeding ports provided in the lower portions; a horizontal conveying apparatus, arranged horizontally, for conveying in one direction the valuable papers which are fed from the feeding ports of the stackers by putting them thereon; a vertical conveying apparatus having a backet, arranged to the front edge portion in the conveying direction of the horizontal conveying apparatus so as to be vertically movable, for conveying the valuable papers conveyed by the horizontal conveying apparatus to an upper taking-out port; and a collecting apparatus for taking out and collecting the valuable papers in the backet of the vertical conveying apparatus.

According to the invention, since the horizontal conveying apparatus is horizontally arranged below the stackers arranged in parallel, a plurality of different kinds of valuable papers can be simultaneously fed out from a plurality of stackers and the working efficiency is improved. Further, since the fed valuable papers are put into the backet and elevated and conveyed to the delivery port, when a plurality of kinds of valuable papers are simultaneously fed out, they can be delivered in a lump. Further, the apparatus can be constructed as a compact size.

Further an exchanging apparatus according to the present invention comprises : a card reader to read data stored in a card inserted; means for inputting the number of valuable papers to be delivered; paying means for receiving money; means for accommodating the valuable papers in which the valuable papers can be fed out one by one; printing means for printing the numbers to the valuable papers which were fed out from the accommodating means; means for storing the numbers printed to the valuable papers by the printing means and the card data read out by the card reader so as to correspond to one another; and control means for controlling in a manner such that in response to the operation such that the money of the amount corresponding to the exchange value of the valuable papers of the number which was input by the input means has been received by the paying means, the input number of valuable papers are fed out from the accommodating means, different numbers are printed to the fed-out valuable papers by the printing means, the printed numbers and the card data are stored into the memory means so as to correspond to one another, and the valuable papers on which the numbers were printed are delivered.

According to the invention, the peculiar numbers are printed to the valuable papers which are issued and the ID data of person who receives the valuable papers and the peculiar numbers printed thereon are stored so as to correspond to each other. Therefore, the exchanging works of the valuable papers and the number registering works are completely automated, the manual works of the bank clerks and customers are eliminated, the working efficiency can be improved, the services can be improved, and the unmanned operations can be realized.

BRIEF DESCRIPTION OF THE DRAWINGS

Figs. 1 to 9 show the first embodiment of the present invention;

Fig. 1 is a perspective view showing an outside appearance of an exchanging apparatus of valuable papers;

Fig. 2 is a side elevational view showing the outline of a mechanism of a delivery apparatus of valuable papers;

Fig. 3 is an enlarged side elevational view of a backet and its elevating mechanism;

Fig. 4 is a horizontal enlarged cross sectional view of a supporting portion of the backet and shows a state in which the backet is set almost horizontally;

Fig. 5 is an enlarged side elevational view of a collecting unit and the descended backet;

Fig. 6 is an enlarged front view of the collecting unit;

Fig. 7 is a block diagram showing an electric construction of the exchanging apparatus;

Fig. 8 is a flowchart showing a procedure for the exchanging operation using cash;

Fig. 9 is a flowchart showing a procedure for the exchanging operation using a card;

Figs. 10 to 14 show the second embodiment of the present invention;

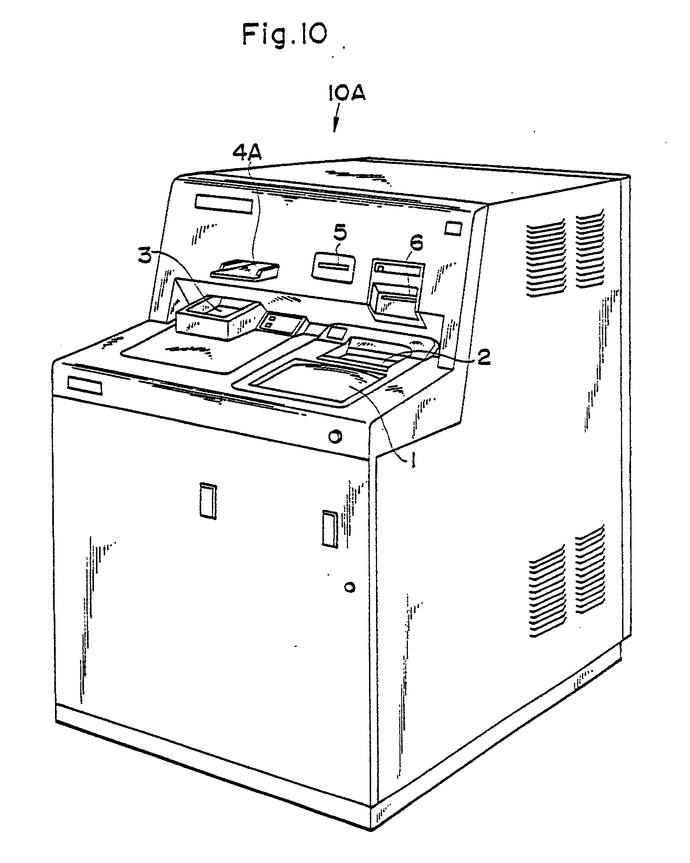

Fig. 10 is an external perspective view of an exchanging apparatus of a traveler's check;

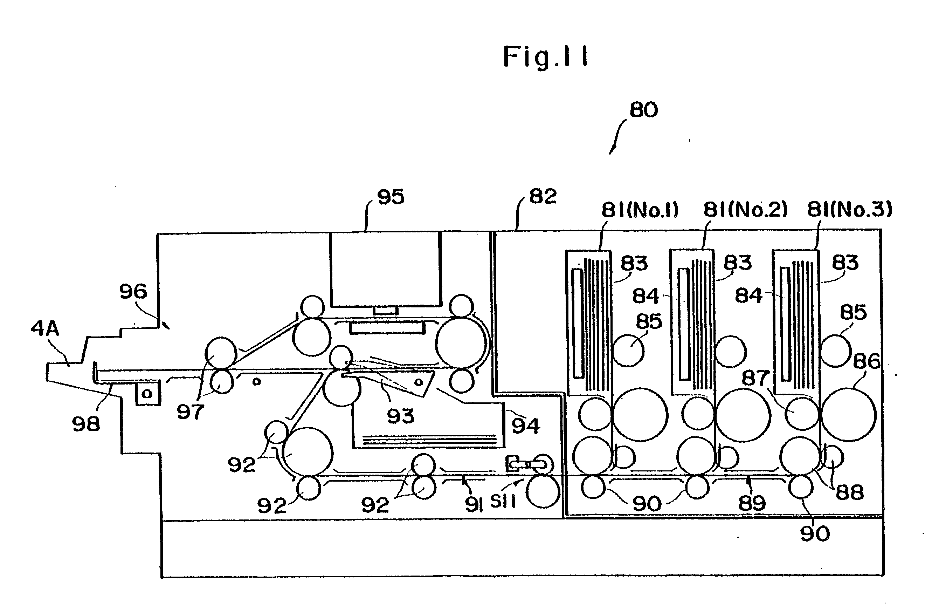

Fig. 11 is a schematic cross sectional view of an apparatus for issuing traveler's checks;

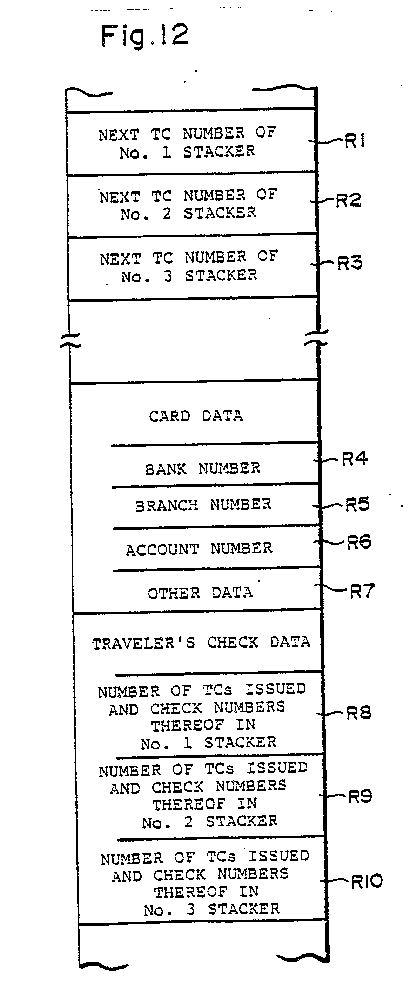

Fig. 12 is a diagram showing memory areas in an RAM:

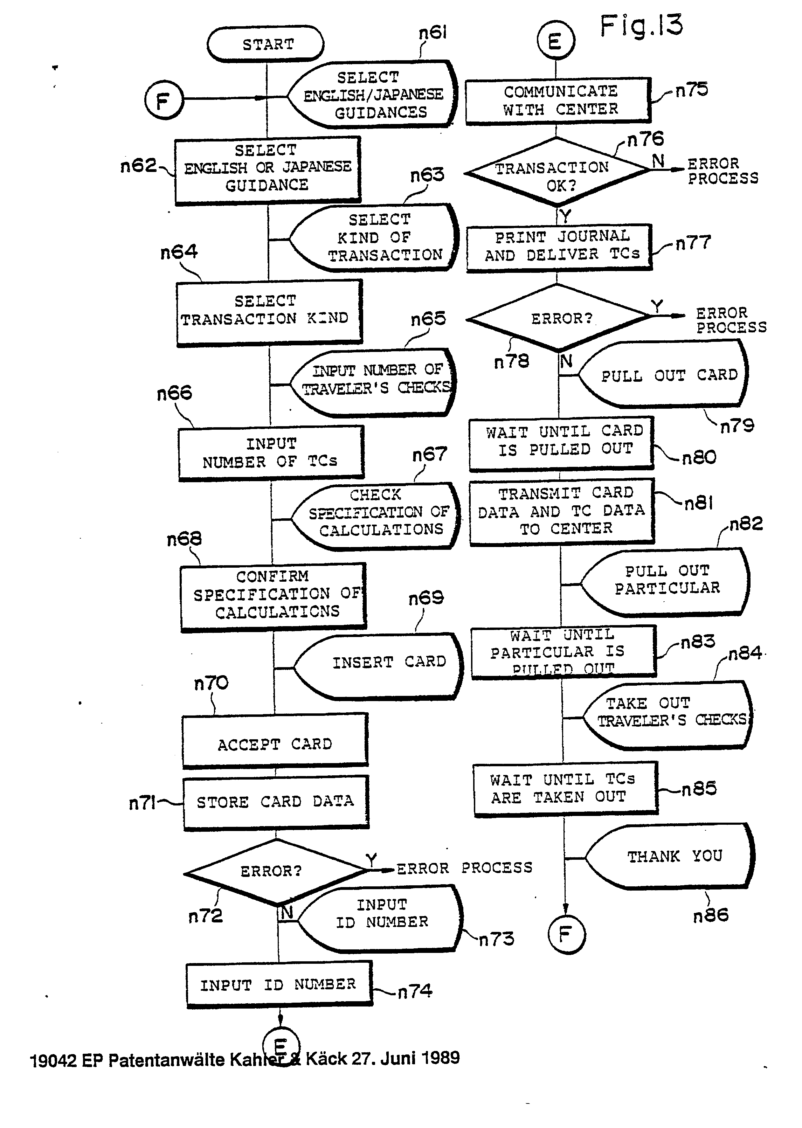

Fig. 13 is a flowchart showing the operation of the exchange transaction process; and

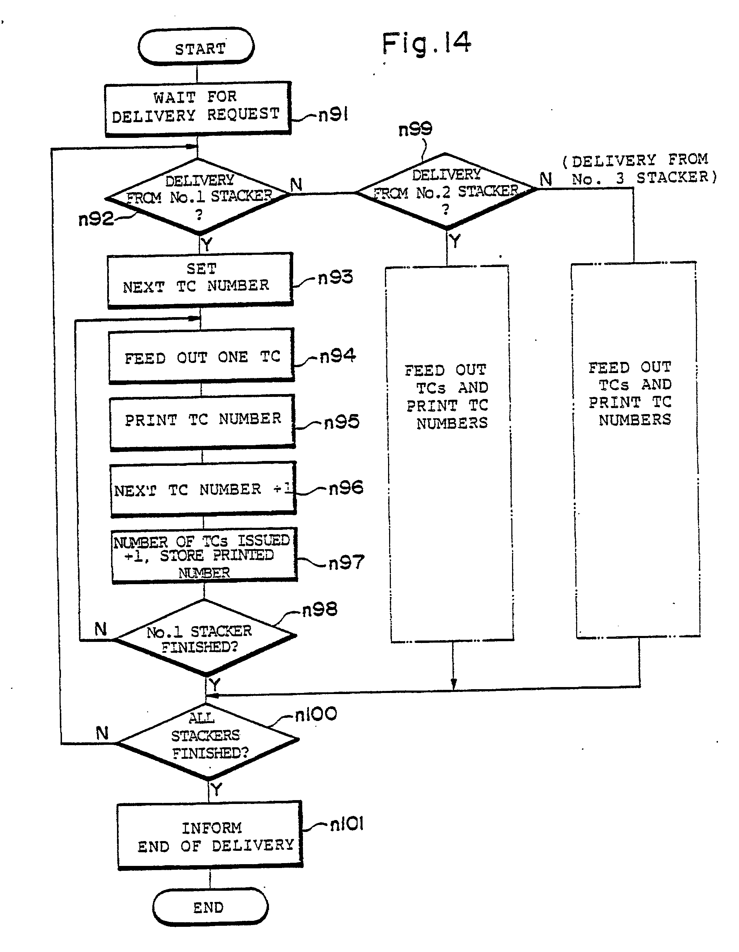

Fig. 14 is a flowchart showing the operation of the issuing process of traveler's checks.

DETAILED DESCRIPTION OF THE PREFERRED EMBODIMENTS

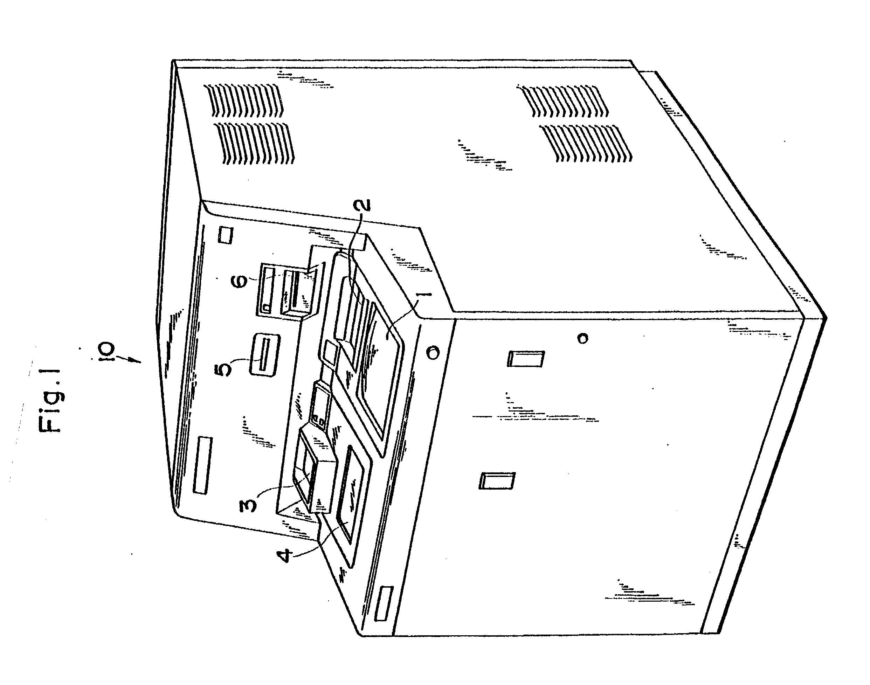

Fig. 1 shows an apparatus for exchanging domestic money (including cash and savings of the bank account and the like) to traveler's checks and foreign cash (banknote). The exchanging apparatus is connected in an on-line manner to a control center of the bank in which a customer information file including information (account numbers, balances, and the like) regarding the accounts of the customers is provided.

By using such an apparatus, the customer (user) can exchange, for instance, the money of yen to the traveler's checks of U.S. dollars and the U.S. dollar bills. To simplify the explanation, it is assumed that the exchange rate is set such that one U.S. dollar = 100 yen.

When the customer puts hundred thousands yen (¥100,000) into the exchanging apparatus, for instance, he can obtain the traveler's checks of 800 U.S. dollars and the bills of 200 U.S. dollars from the exchanging apparatus on the basis of his selection. Obviously, he can get the traveler's checks of 1000 U.S. dollars or the cash of 1000 U.S. dollars in accordance with the selection. In general, since the exchange rate is not the exact value such as 1 U.S. dollar = 100 yen, a fraction is caused in the calculation of the exchange. The cash of the amount corresponding to the fraction is delivered as a change.

In place of putting the cash of ¥100,000 into the exchanging apparatus, the customer can also transfer the amount corresponding to the value of the valuable papers to be delivered from the apparatus from his account by using the bank card (cash card).

To deliver the traveler's checks or foreign money, traveler's check packs (envelopes) and foreign money cash packs have previously been provided in the exchanging apparatus. The traveler's check packs include various kinds such as 100 U.S. dollars pack, 500 U.S. dollars pack, 1000 U.S. dollars pack, etc. In general, a plurality of checks of the amounts of a plurality of kinds are enclosed in a traveler's check pack. For instance, five checks of 20 U.S. dollars, two checks of 50 U.S. dollars, and three checks of 100 U.S. dollars are enclosed in the pack of 500 U.S. dollars.

To take countermeasures for the loss or theft, a series of check numbers are printed on the traveler's checks and it is necessary to register them. An application form to request for issuing the traveler's checks is enclosed in the traveler's check pack. The check numbers of the traveler's checks enclosed in the pack have already been written in the application form. The customer who received the traveler's check pack from the exchanging apparatus takes out the application form from the pack and writes the necessary items such as address, name, and the like to the application form and submits to the bank. Thus, the check numbers are registered with respect to the customer.

The foreign cash (bills) can be also enclosed into packs by a predetermined amount per pack in a manner similar to the traveler's checks. Since the bills can be handled one by one, they are not necessarily packed.

The traveler's checks are not limited to the checks of the U.S. dollar but may be prepared in the forms of the checks of the currency of the customer's country (for instance, yen), checks of West Germany mark, checks of French franc, and the like. Foreign cashes of various countries can be also prepared.

It is preferable to install a plurality of such exchanging apparatuses at a bank having a wide store area. It is desirable to construct in a manner such that one of the exchanging apparatuses can deliver the traveler's checks of U.S. dollar and the bills of U.S. dollar, another exchanging apparatus can deliver the traveler's checks and bills of West Germany mark, and further another exchanging apparatus can deliver the checks of yen, respectively.

In Fig. 1, a CRT display 1 is arranged at the right corner of the upper surface on the front side of an exchanging apparatus 10. A touch panel is arranged on the display surface of the CRT display 1. Guide messages of the operations are displayed on the display 1 for a customer. A depressing position of the touch panel and functions are also displayed on the display 1. The customer can execute various kinds of inputs through the touch panel.

A bill inlet/outlet port 2 arranged in the inner portion of the display 1 is used to enter the bills for exchange and to delivery the change of the bills of a small amount.

On the other hand, a coin taking-out port 3 arranged in the left upper portion is used to take out the coins delivered as a change. A traveler's check taking-out port 4 arranged in front of the coin taking-out port 3 is used to delivery the packed traveler's checks and packed foreign moneys (bills).

A card inserting port 5 arranged on the vertical wall. side is used to insert a bank card (cash card) when the exchanging transaction is executed by using the card. In the case of the card transaction, the exchanging apparatus 10 communicates with the center in an on-line manner and executes the transaction.

A particulars pulling-out port 6 arranged adjacent to the card inserting port 5 is used to deliver the printed particulars on which the details of the exchanging transaction were printed.

In the exchanging apparatus 10 constructed as mentioned above, traveler's check packs and cash packs of a plurality of amounts of a plurality of countries are enclosed in the delivery apparatus of traveler's checks and the like as explained above. The exchange rates of a plurality of countries at that date are displayed on the display 1. The customer selects desired country and amount of money by operating the touch panel on the display surface of the display 1 and puts the bills (yen) of a predetermined amount into the bill inlet/outlet port 2. Thus, the traveler's check packs (and cash packs) of the amount corresponding to the input bills are delivered to the traveler's check taking-out port 4, the change is delivered to the bill inlet/outlet port 2 and coin taking-out port 3, and the particulars are delivered to the particulars pulling-out port 6.

In the case of performing the transaction by using a card, a bank card is inserted into the card inserting port 5 in place of putting the cash as mentioned above.

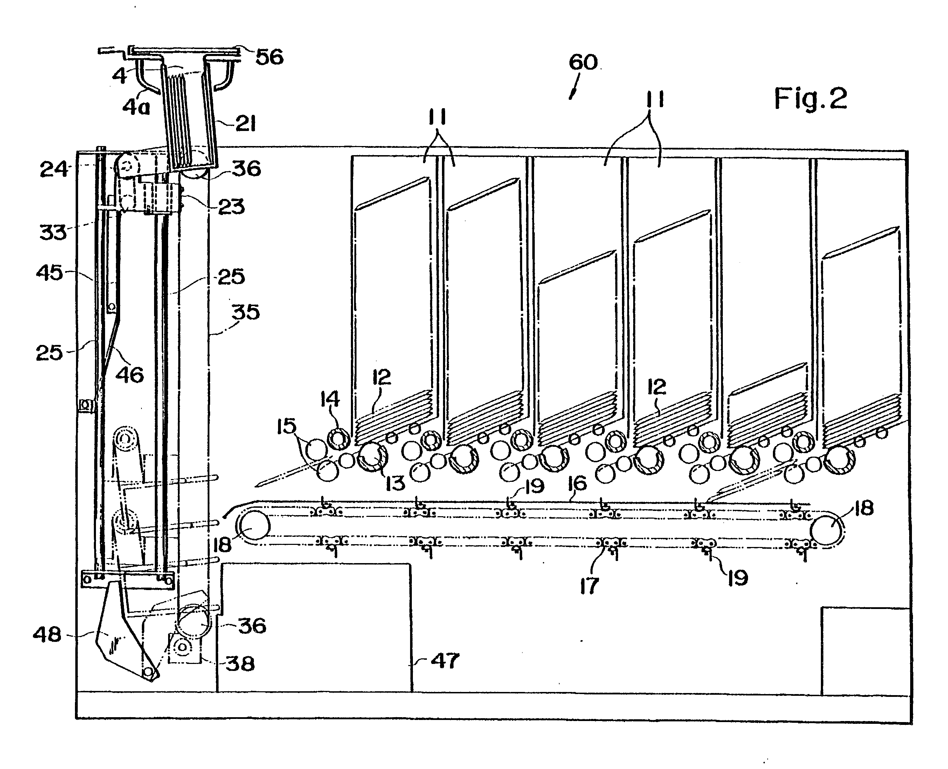

Fig. 2 shows a delivery apparatus 60 of traveler's check pack or the like provided in the exchanging apparatus 10.

In the delivery apparatus 60, a plurality of (six in the embodiment) stackers 11 are arranged in a horizontal line. A number of different kinds of traveler's check packs and foreign money packs (hereinafter, simply referred to as packs) 12 are accommodated in the stackers 11, respectively.

The packs 12 are vertically piled in a slant state and enclosed in each stacker 11. A feeding roller 13 is provided at an oblique lower position of the bottom portion of the stacker 11. By rotating the feeding roller 13 once, one pack 12 existing at the lowest position is fed out of the stacker 11.

A gate roller 14 is arranged in the outside upper portion of the feeding-out portion. When the pack is fed out, the gate roller 14 continuously rotates in the reverse feeding direction. It is prevented by such a reverse rotation that two packs are simultaneously fed out in an overlap state.

Conveying rollers 15 are arranged on the outside of the gate roller 14. The fed-out pack 12 is sent out to the next stage by the conveying rollers 15.

A horizontal guide plate 16 is provided below the stackers 11. On the lower surface side of the guide plate 16, a plurality of chains 17 are reeved to sprockets 18. Hooks 19 are fixed to the chains 17 at regular intervals. The upper edges of the hooks 19 are projected to the upper surface of the guide plate 16.

When the chains 17 are driven in the conveying direction, the hooks 19 move in the conveying direction. The packs 12 which were fed out from the upper stackers 11 are pushed by the hooks 19 and slided on the guide plate 16 to be conveyed.

Therefore, since all of the packs 12 fed out from the stackers 11 are received by the guide plate 16, the feeding operations of a plurality of stackers 11 can be simultaneously executed. A receptacle, as a backet 21 is vertically movably provided at the front edge position in the conveying direction of the guide plate 16. The backet 21 receives the conveyed packs 12 and transports them to the pack taking-out port 4 provided in the upper portion.

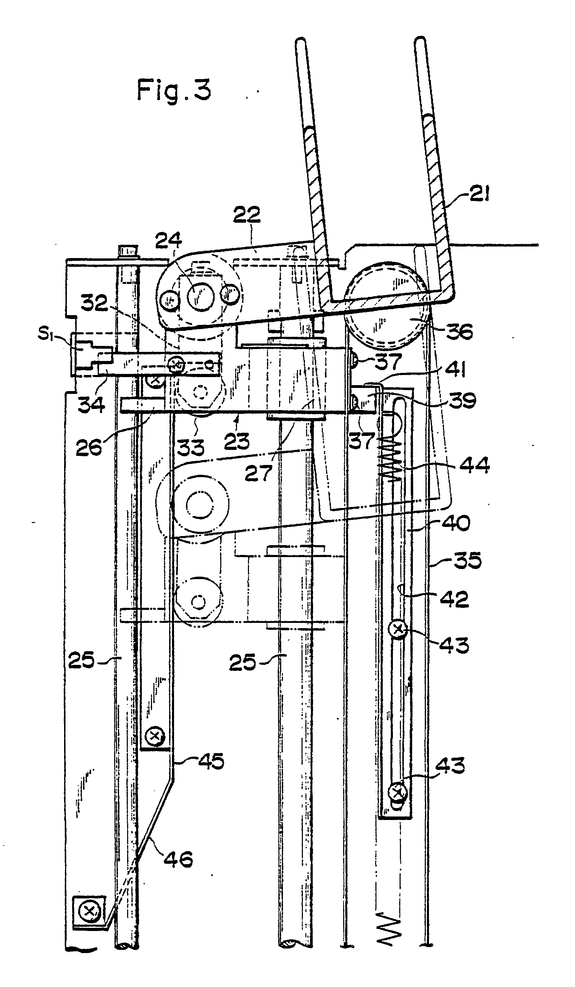

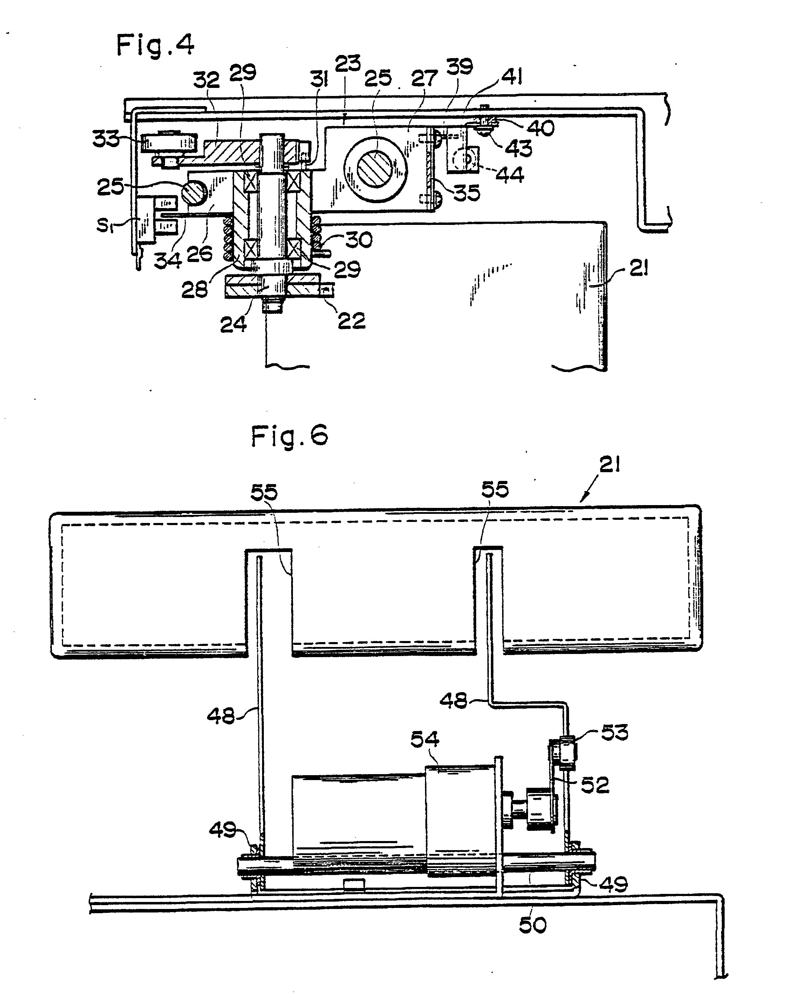

As shown in Figs. 3 and 4 as well, the backet 21 is formed in a U-shape whose free end side is open and the packs 12 are input and delivered through the open portion.

A coupling member 22 is coupled with the side surface of the backet 21. A free end of the coupling member 22 is rotatably supported by a fulcrum shaft 24 to a slider 23 which is vertically slidable. The backet 21 is rotatably supported so as to be set to the substantially horizontal pack receiving position and vertical pack delivery position. The coupling member 22 is fixed to the fulcrum shaft 24.

Two guide rods 25 are vertically attached onto a frame. The slider 23 is slidably supported to the two guide rods 25 through front and rear sliding portions 26 and 27 of the slider 23. An axially supporting portion 28 rotatably supports the fulcrum shaft 24 through bearings 29.

That is, the coupling member 22 and the fulcrum shaft 24 are integrally fixed. A spring 30 is wound around the outer peripheral surface of the axially supporting portion 28. One end of the spring 30 is attached to the axially supporting portion 28 and the other end is attached to the backet 21 side. The backet 21 is urged to the almost horizontal pack receiving position by the spring 30. A part of the backet 21 is come into contact with a stopper 31 formed on the slider 23, thereby keeping the backet 21 to such a pack receiving position.

One end of a lever 32 is fixed to the other end of the fulcrum shaft 24. A roller 33 is rotatably supported to the other end of the lever 32. When the bracket 21 is elevated, the roller 33 comes into contact with a restricting plate 45. Thus, the position of the backet 21 is changed from the almost horizontal pack receiving position to the almost vertical pack delivery position against the urging force of the spring 30.

On the other hand, a sensing member 34 to detect the position is fixed to the slider 23. When the slider 23 exists at the pack delivery position, the sensing member 34 is detected by a first sensor $S_1$. When the slider 23 exists at the receiving position of the packs which are transported through the guide plate 16, the sensing member 34 is detected by a second sensor $S_2$. When the slider 23 exists at the pack collecting position, the sensing member 34 is detected by a third sensor $S_3$. On the basis of the results of the detection, the vertical motions of the slider 23 and backet 21 are controlled. The sensors $S_1$ to $S_3$ are fixed to the frame.

A drive belt 35 is reeved along the vertical moving direction of the slider 23. The drive belt 35 is wound between pulleys 36 (refer to Fig. 2) arranged at the upper and lower positions. The pulleys 36 are rotatably supported to the frame.

A part of the drive belt 35 is fixed to the sliding portion 27 of the slider 23 by using screws 37. The slider can be vertically moved by forwardly or reversely driving the drive belt 35. The drive belt 35 is driven by a pulse motor 38 (refer to Fig. 2) arranged in the lower portion.

A retaining member 39 is fixed by the screws 37 to the position where the drive belt 35 is fixed to the sliding portion 27. The retaining member 39 is in contact with a head portion 41 of a sliding rod 40 which faces the retaining member 39.

The sliding rod 40 is long in the vertical direction and formed with a long hole 42 in the central portion. Two upper and lower guide pins 43 fixed to the frame pierce through the long hole 42, so that the sliding rod 40 is slidably supported in the vertical direction and is downwardly urged by a spring 44. The spring 44 is attached between the upper portion of the sliding rod 40 and the lower portion of the frame.

In general, when the slider 23 has moved to the highest pack delivery position, the sliding rod 40 exists at the elevated position by the retaining member 39 against the urging force of the spring 44.

For instance, when the power supply of the pulse motor 38 is stopped by a power failure and the motor 38 is made inoperative, the spring 44 functions to descend the slider 23 and backet 21 to the positions shown by broken lines in Fig. 3. Even if the current supply to the motor 38 is stopped, since the weights of the slider 23 and backet 21 existing at the pack delivery position are very light, they are held at those positions due to a rotational slide resistance of the motor 38, a resistance of a reduction mechanism provided between the output shaft of the motor 38 and the pulleys 36, and slide resistances between the sliding portions 26 and 27 of the slider 23 and the guide rods 25. At the pack delivery position, the backet 21 is projected into the pack taking-out port 4. In such a state, when the operator or clerk of the bank tries to draw out the delivery apparatus 60 from a cabinet (not shown) in which the delivery apparatus is enclosed, the backet 21 collides with a bottom wall 4a of the pack taking-out port 4. To avoid such a situation, the backet 21 is moved to the position lower than the port 4 by the urging force of the spring 44.

The restricting plate 45 which faces the driven roller 33 is provided for the frame at the upper position on the rear surface side of the backet 21 corresponding to the position which faces the driven roller 33. The lower portion of the restricting plate 45 forms a slant surface 46 at the position higher than the pack receiving position from the guide plate 16.

When the backet 21 is elevated, the roller 33 comes into contact with the restricting plate 45 from the almost horizontal pack receiving position through the slant surface 46, so that the position of the backet 21 can be changed to the substantial vertical pack delivery position. On the other hand, when the backet 21 descends, the roller 33 is away from the restricting plate 45 through the slant surface 46, so that the backet 21 is returned to the almost horizontal pack receiving position.

A collecting box 47 is arranged at the position which faces the backet 21 which had descended and arrived at the pack collecting position, that is, below the front edge portion in the conveying direction of the guide plate 16 (refer to Fig. 2). When a cancelling has been input or if the customer forgot to take out the packs which had been delivered to the pack taking-out port 4, the packs 12 in the backet 21 are collected to the collecting box 47.

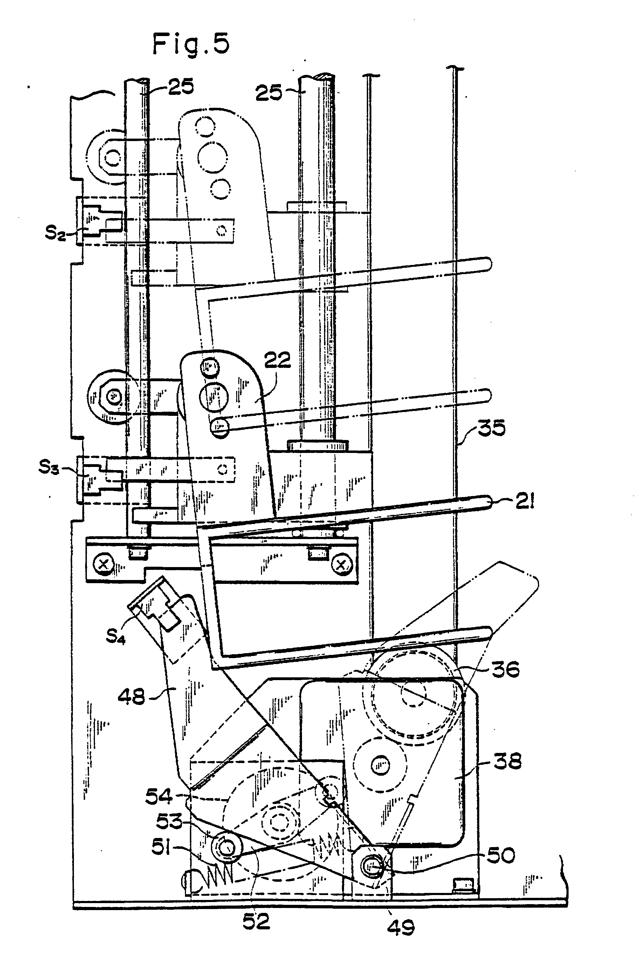

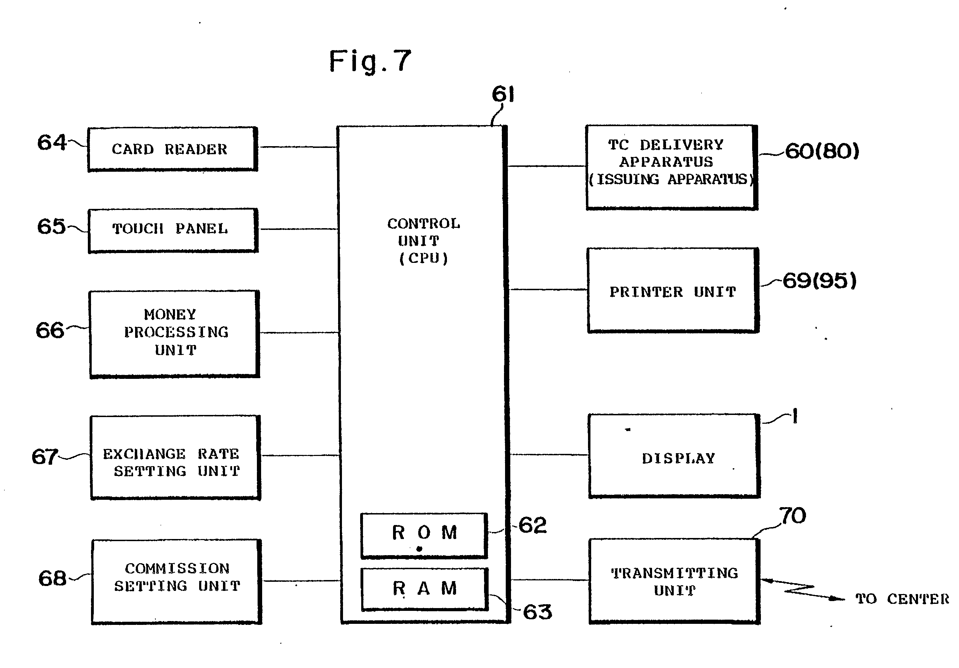

As shown in Figs. 5 and 6, at the collecting position, lower edges of a pair of right and left pushing levers 48 are fixed to a fulcrum shaft 50 which is rotatably supported to fixing members 49 fixed to the frame, thereby supporting the levers 48 so that they can oscillate to the side of the collecting box 47. The levers 48 are also urged by a spring 51 in the releasing direction (counterclockwise in Fig. 5).

A roller 53 rotatably supported to the free end portion of a crank arm 52 is come into contact with the outside of one of the pushing levers 48. The crank arm 52 is rotated clockwise (refer to Fig. 5) by a motor 54. Thus, as shown by dot and dash lines in Fig. 5, the pushing levers 48 can be oscillated toward the collecting box 47 against the force of the spring 51.

On the other hand, slots 55 for allowing the upper edges of the pushing levers 48 to pass are formed in the rear portion and bottom portion of the backet 21. Therefore, in a state in which the packs are enclosed in the backet 21, when the pushing levers 48 rotate clockwise, the internal packs are pushed out by the upper edges of the pushing levers 48 and can be moved and enclosed into the collecting box 47.

A sensor $S_4$ detects the releasing position of the lever 48 and controls the driving of the lever 48 by the motor 54.

In the delivery apparatus 60 constructed as mentioned above, generally, the backet 21 is held at the almost horizontal pack receiving position at which the opening of the backet faces the front edge in the conveying direction of the guide plate 16. The backet 21 existing at that position (shown by the dot and dash lines in Fig. 5) is detected by the second sensor $S_2$.

When packs 12 are fed out from stackers 11, the hooks 19 of the chains 17 push them and transport to the backet 21. The packs 12 are enclosed into the backet 21. If a plurality of packs 12 to be delivered exist, the pulse motor 38 is controlled so as to descend the backet 21 by the distance corresponding to one pack 12 every time one pack 12 is enclosed. In this manner, it is prevented that when the pack 12 is enclosed into the backet 21, the pack 12 which is subsequently enclosed collides with the pack 12 which has already been enclosed.

After the packs 12 of the number designated by the customer were enclosed in the backet 21, the pulse motor 38 is driven in the forward direction. The drive belt 35 upwardly slides the slider 23. The backet 21 is elevated and moved to the upper pack taking-out port 4. In the moving step, the roller 33 of the backet 21 slides with the restricting plate 45, so that the position of the backet 21 is changed from the almost horizontal pack receiving position to the almost vertical pack delivery position and the opening of the backet 21 is upwardly directed.

When the backet 21 arrives at the delivery position, the first sensor $S_1$ detects it, so that the movement of the backet 21 is stopped.

Thereafter, since a shutter 56 of the pack taking-out port 4 is opened. the customer can take out the packs 12 from the backet 21.

On the other hand, if the customer forgot to take out the packs from the pack taking-out port 4 or the delivery of the packs 12 fed out of the stackers 11 is cancelled, the pulse motor 38 is reversely rotated to descend the backet 21 toward the collecting position. The third sensor $S_3$ detects it and stops the movement of the backet 21.

Next, by rotating the crank arm 52 by the motor 54, the roller 53 of the crank arm 52 rotates the pushing lever 48 in the collecting direction. Thus, the packs 12 enclosed in the backet 21 can be collected to the collecting box 47. After that, the motor 54 is reversely rotated and the fourth sensor $S_4$ detects that the pushing lever 48 was returned to the releasing position, so that the rotation of the motor 54 is stopped.

Fig. 7 shows an outline of an electric construction of the exchanging apparatus 10.

A control unit 61 includes a CPU, an ROM 62, an RAM 63, and the like. The CPU controls the circuit components in accordance with a program stored in the ROM 62. Necessary data is stored into and read out from the RAM 63.

A card reader 64 reads the card data recorded on a bank card inserted to the card inserting port 5 and, if necessary, writes new data to the card.

A touch panel 65 is arranged on the display surface of the display 1. The customer can input a will, data, and the like by pressing the positions to be selected which were displayed on the display 1 on the upper surface.

A money processing unit 66 discriminates the validation and kinds of the bills put into the bill inlet/outlet port 2 and counts the amount of bills input. As necessary, the change is delivered by bills or coins to the bill inlet/outlet port 2 or coin taking-out port 3.

An bank clerk sets an exchange rate of the foreign money to be handled by an exchange rate setting unit 67. The bank clerk sets the exchange commission by a commission setting unit 68. It is also possible to construct in a manner such that the exchange rate and commission are set in the control center and are periodically transmitted to the exchanging apparatus 10 which operates in the on-line mode. The setting units 67 and 68 are particularly effective in the exchanging apparatus which operates on the off-line mode.

A printer unit 69 prints out the exchange specification to a journal and a receipt and delivers the receipt as a particulars to the particulars pulling-out port 6. The journal is preserved as a memorandum of the bank.

The foregoing operation of the delivery apparatus 60 is also controlled by the control unit 61. A transmitting apparatus 70 is used to communicate with the control center.

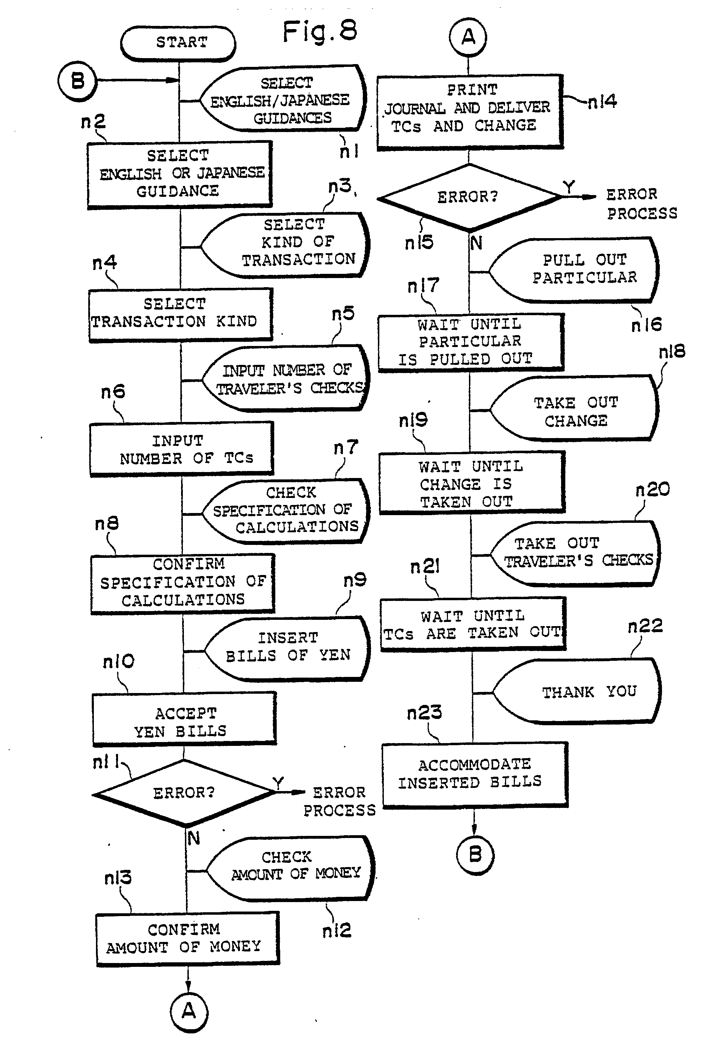

Fig. 8 shows a procedure for the exchanging operation control between the cash and the traveler's checks (and foreign money) by the exchanging apparatus 10.

The display 1 displays a guidance for the customer to select which one of English and Japanese he desires as a guidance language which is displayed, and the customer selects either one of the English and Japanese languages by using the touch panel 65 on the surface of the display 1 (step n1 and n2). Thus, the guidances are displayed hereinafter by the selected language.

Next, the display 1 guides to allow the customer to select the kind of transaction and also displays the kinds of foreign moneys which can be handled. The customer selects the kind of desired foreign money to input. (Steps n3 and n4)

Next, the display 1 guides to allow the customer to select the number of traveler's check packs 12 and also display the amount of prepared traveler's check packs 12. The display 1 also displays the numerical value indicative of the number of packs 12. The customer inputs the number of desired traveler's check packs 12. (Steps n5 and n6) The customer can similarly input not only the number of traveler's check packs but also the amount of foreign cash or the number of cash packs.

When the kind of foreign money and the number of packs thereof are input as mentioned above, the amount of money which is required for transaction is calculated by using the exchange rate and commission which were set and transmitted from the center or the exchange rate set by the exchange rate setting unit 67 and the commission set by the commission setting unit 68. The specification of the exchange calculations is displayed on the display 1. The operation to check whether the content of the displayed specification is correct or not is guided. If it is correct, the customer inputs the acknowledgment. (Steps n7 and n8)

Next, the display 1 guides to allow the customer to put the cash of the calculated transaction amount or more. When the customer puts the cash (bills) into the bill inlet/outlet port 2, the money processing unit 66 executes the cash receiving process (Steps n9 and n10). That is, the inserted bills are taken into the apparatus and discriminated one by one. The validation and kind of each of the bills are checked. The amount of inserted bills is calculated and compared with the transaction amount which has already been calculated before, thereby deciding whether the amount of inserted bills lacks or it is necessary to deliver the change.

If an error has been detected in the above money processes, the error process is executed. If the cash receiving process is correct, the amount of inserted bills, the transaction amount, and the amount of money corresponding to the difference between them are displayed on the display 1, thereby guiding the confirmation to the customer. The customer observes the content displayed on the display 1 and if it is correct, the customer inputs the acknowledgment. (Steps n11, n12, and n13)

When the acknowledgment of the customer is input, the next process is executed (step n14). That is, the traveler's check delivery apparatus 60 feeds out the traveler's check packs and foreign money packs 12 of the designated foreign money and amount from the stackers 21. These packs are enclosed into the backet 21 and conveyed to the traveler's check taking-out port 4. If the change is necessary, the money processing unit 66 delivers the small amount bills or coins to the bill inlet/outlet port 2 or coin taking-out port 3. The printer unit 69 prints out the transaction specification with respect to the amount of packs, number of packs, amount of inserted bills, transaction amount, commission, and the like and delivers the particulars to the particulars taking-out port 6.

If any error occurred in those processes, the error process is executed (step n15). If no error occurs, the display 1 guides to allow the customer to pull out the particulars. By looking at such a guidance, the customer pulls out the particulars delivered to the port 16. (Steps n16 and n17)

The display 1 guides to allow the customer to take out the change, so that the customer takes out the bills or coins delivered to the bill inlet/outlet port 2 or coin taking-out port 3. (Steps n18 and n19)

The display 1 guides to allow the customer to take out the packs 12. The shutter 56 is opened and the customer then takes out the packs 12 from the taking-out port 4. (Steps n20 and 21)

The display 1 displays the end of transaction and the money processing unit 66 encloses the inserted bills into a predetermined enclosing portion and finishes the exchanging process (steps n22, n23).

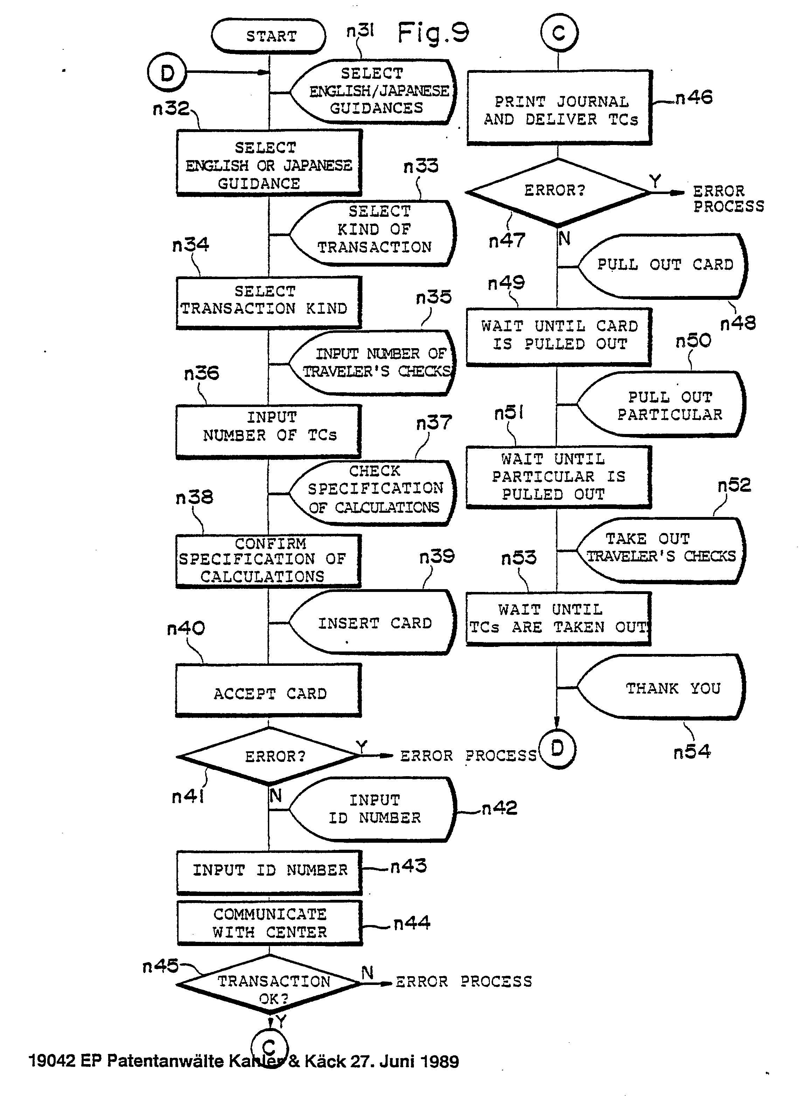

The control operation of the control unit 61 in the exchange transaction using a bank card will now be described with reference to Fig. 9.

In the case of performing the exchange transaction using a card, the exchanging apparatus 10 is connected to the control center in an on-line manner. The exchange rate and commission are set by the center side and transmitted to the exchanging apparatus 10 through the transmitting apparatus 70 and are stored into predetermined areas in the RAM 63.

Since the processes in steps n31 to n38 are similar to those in steps n1 to n8 for the exchange processing operation using the cash as mentioned above, their descriptions are omitted. When the transaction amount is specified, the display 1 guides to allow the customer to insert a bank card. The customer inserts the card into the card inserting port 5, so that the card accepting process is executed. (Steps n39, n40) The card reader 64 reads the card data recorded on the card, that is, the data such as account number, personal identification number, and the like and stores into the RAM 63. If an error occurred in the above processes, the error process is executed (step n41).

If no error occurs, the display 1 guides to allow the customer to input the personal ID number (step n42). When the customer inputs the personal ID number by using the touch panel 65, the input ID number is compared with the ID number which was read out of the card, thereby checking to see if they coincide or not (step n43). If they coincide, telegraphic messages including the transaction amount, ID number, account number, and the like are edited and transmitted to the center (step n44).

When the center receives the edited telegraphic messages from the exchanging apparatus 10, the center searches the account number in the messages from the customer information file and reads out the balance of the account of the account number. The balance and the received transaction amount are compared, thereby checking whether the balance is larger than the transaction amount or not. If the balance is larger than the transaction amount, a telegraphic message indicative of the permission of the transaction is made. If the transaction amount is larger than the balance, if the corresponding account does not exist, if it is determined that the inserted card is the invalid card, or the like, a telegraphic message indicative of the inhibition of the transaction is made. Either one of the above messages is transmitted from the center to the relevant exchanging apparatus 10. On the other hand, if the transaction is permitted, the balance is updated by subtracting the transaction amount from the balance of the corresponding account. The updated new balance is also included in the telegraphic message indicative of the permission of the transaction. The discrimination of the ID number may be also executed at the center.

When the center returns a message indicative of the inhibition of the transaction, the error process is executed (step n45). If the transaction is permitted, the following process is executed (step n46).

That is, the traveler's check delivery apparatus 60 feeds out the traveler's check packs and foreign money packs 12 of the designated foreign money and amount and encloses them into the backet 21 and conveys to the traveler's check taking-out port 4.

The printer unit 69 prints the specification of the transaction with respect to the amount of packs, number of packs, transaction amount, commission, new balance, and the like and delivers the particulars to the particulars pulling-out port 6.

If any error occurred in the above processes, the error process is executed (step n47). If no error occurs, the display 1 guides to allow the customer to pull out the card and the customer then pulls out the card which was returned to the card inserting port 5 (steps n48, n49).

The display 1 guides to allow the customer to pull out the particulars and the customer then pulls out the particulars which was delivered to the particulars pulling-out port 6 (steps n50, n51).

The display 1 guides to allow the customer to take out the packs 12 of traveler's checks and the like and the shutter 56 is opened, so that the customer takes out the packs 12 from the taking-out port 4 (steps n52, n53).

After that, the display 1 displays the end of the transaction and the exchange transaction process is finished (step n54).

The traveler's check packs and foreign money packs of the kind selected by the customer as mentioned above are automatically delivered and the commission is also automatically received. Thus, the services and the working efficiency can be improved. It is sufficient that the bank clerk executes only the registering work of the traveler's checks based on the application forms taken out of the packs.

Further, not only the transaction by the cash but also the transaction using a card by the on-line can be executed, so that the services and the working efficiency can be improved. Since the exchange rate is input from the center, there is no need to set it on the terminal side. Moreover, in the transaction using the card, since the amount of money having a fraction of one yen, two yen, or the like can be easily handled, there is no need to provide a processing unit of small amount coins such as one yen, five yen, and the like for the exchanging apparatus.

It is not always necessary to prepare foreign cash (bills) into packs but the foreign bills of the kind designated can be easily delivered by a desired number of bills.

Further, it is also possible to construct the apparatus so that not only a bank card but also a credit card can be used. In such a case, the valuable papers are delivered by giving the customer's credit as security within a range of the permitted credit limit amount of the owner of the credit card or within a range of a predetermined limit amount.

Fig. 10 shows an exchanging apparatus of the second embodiment. An exchanging apparatus 10A can not only perform the exchange between the domestic bills and the foreign bills but also issue the traveler's checks. In the case of issuing the traveler's checks, a card (bank card or credit card) is used. In Fig. 10, the same parts and components as those shown in Fig. 1 are designated by the same reference numerals and their descriptions are omitted. A traveler's check taking-out port 4A is formed on an almost vertical panel.

The operation to issue the traveler's checks by using a card will now be described hereinbelow.

According to the exchanging apparatus 10A, the traveler's checks of a plurality of amounts of one or a plurality of countries are enclosed in stackers in an traveler's check issuing apparatus 80. The exchange rates at that date are displayed on the display 1. After the card is inserted into the card inserting port 5, the customer selects the kind and number of traveler's checks to be exchanged by operating the touch panel on the display surface of the display 1. Thus, the traveler's checks are delivered to the taking-out port 4 after the registration numbers (check numbers) were printed on the traveler's checks. The particulars are delivered to the particulars pulling-out port 6.

In the case of paying by cash, the card is also used. In such a case, the account number or member's number of the card is used as necessary data to register the check numbers. When the bills (yen) of a predetermined amount are put into the bill inlet/outlet port 2, the traveler's checks are delivered to the taking-out port 4 with the registration numbers printed on the checks. The change is delivered to the bill inlet/outlet port 2 and coin taking-out port 3. The particulars are delivered to the particulars pulling-out port 6.

Fig. 11 shows the traveler's check issuing apparatus 80 for enclosing traveler's checks on which no registration number is printed and for printing the numbers on the checks and for delivering the traveler's checks with the registration numbers printed thereon. A plurality of (three in the embodiment) stackers 81 (Nos. 1 to 3) which are arranged in parallel are provided in one cartridge 82. The cartridge 82 is detachably provided for the apparatus.

The cartridge 82 can be exchanged in accordance with the kind of traveler's checks 83 to be handled.

The traveler's checks 83 of the kind of money which was set for each of the stackers 81 are aligned and enclosed in the stackers 81 in a state in which the checks are vertically set and are piled in the lateral direction so as to be taken out one by one.

Each stacker 81 has a pressing plate 84 for pressing the enclosed traveler's checks 83 to the feeding-out side by proper urging means. A feeding roller 85 is arranged on the feeding-out side which faces the pressing plate 84. A feeding roller 86 is also arranged below the feeding roller 85. A frictional roller 87 which is allowed to rotate only in the direction opposite to the feeding-out direction is arranged so as to face and be come into contact with the feeding roller 86.

Therefore, by rotating the feeding rollers 85 and 86 in the feeding direction, the traveler's checks 83 enclosed in the stacker 81 can be fed out one by one.

A pair of conveying rollers 88 to pull out the fed traveler's checks 83 are arranged below the feeding roller 86 and frictional roller 87. A first conveying path 89 is provided below the conveying rollers 88 of each stacker 81. The conveying rollers 88 send out the traveler's checks 83 which were fed out of each stacker 81 to the first conveying path 89. The first conveying path 89 is constructed by rollers 90, a belt, a guide plate, and the like and conveys the traveler's checks 83 fed out of the cartridge 82 to the main body side of the issuing apparatus 80.

A second conveying path 91 connected to the first conveying path 89 is provided on the main body side of the issuing apparatus 80. The second conveying path 91 is also likewise constructed by roller 92, a belt, a guide plate, and the like. A double-sheets feed-out sensor $S_{11}$ is arranged at a start edge position of the conveying path 91. As is well known, the sensor $S_{11}$ detects a thickness of two or more sheets of traveler's checks 83, thereby detecting whether the traveler's checks 83 have been fed out in an overlaid state of two or more sheets of checks or not.

In an intermediate portion of the second conveying path 91, the conveying path is curved backwardly in a U-shape. A distributing plate 93 is arranged in the U-shaped curved portion. A collecting box 94 to collect the traveler's checks 83 is arranged below the distributing plate 93. The traveler's checks 83 to be collected are collected and enclosed into the collecting box 94 by operating the distributing plate 93.

Further, the conveying path portion after the distributing plate 93 of the second conveying path 91 is forwardly curved in a U-shape. A printer 95 is mounted on this U-shaped curved portion and prints check numbers to the traveler's checks 83 to be issued.

An accumulating unit 96 to accumulate the traveler's checks 83 is arranged between the position of the distributing plate 93 and the taking-out port 4A. The conveying path passing under the printer 95 is joined to the accumulating unit 96. A pair of upper and lower feeding rollers 97 are arranged in the intermediate portion of the accumulating unit 96. By forwardly or reversely rotating the feeding rollers 97, the traveler's checks 83 issued are delivered or collected.

The traveler's checks 83 on which the check numbers were printed by the printer 95 are accumulated into the accumulating unit 96 arranged at the oblique lower position therefrom.

A stopper 98 is provided in the front edge portion of the collecting unit 96. The traveler's checks 83 on which the check numbers had been printed and which were sent from the printer 95 are aligned by the stopper 98. After the stopper 98 was moved out of the conveying path, the traveler's checks 83 are delivered from the traveler's check taking-out port 4A.

The electrical construction shown in Fig. 7 can be used for the exchanging apparatus 10A except that the traveler's check issuing apparatus 80 is connected in place of the traveler's check delivery apparatus 60. Further, the printer 95 to print the check numbers is included in the printer unit 69.

Fig. 12 shows data which is stored into the RAM 63 of the control unit mentioned above. The numbers of the traveler's checks which are respectively fed out of the stackers Nos. 1 to 3 and are subsequently issued are stored into areas $R_1$, $R_2$, and $R_3$, respectively.

The data read out of the card, that is, the data with respect to the bank number, branch number, account number, and the like are stored into areas $R_4$ to $R_7$ of the card data, respectively.

The numbers of the traveler's checks which were respectively fed out of the stackers Nos. 1 to 3 and all of the check numbers printed on the traveler's checks are stored into traveler's check data areas $R_8$ to $R_{10}$ every exchanging process (every customer), respectively.

Both of the card data and the check numbers printed on the checks issued by using the card are transmitted to the control center. The check numbers are stored in correspondence to the card data.

Fig. 13 shows a whole traveler's check issuing processing procedure of the exchanging apparatus 10A. In the diagram, the processes in steps n61 and n62 are the same as those in steps n31 and n32 in Fig. 9.

The display 1 then guides to allow the customer to select and input a desired transaction kind. The display 1 also displays the kinds of traveler's checks to be handled and the amounts of various kinds of traveler's checks. The customer selects a desired kind and inputs. (Steps n63, n64)

Next, the display 1 guides to allow the customer to select and input the number of traveler's checks and also displays the kinds and amounts of traveler's checks which have been prepared. The customer inputs the number of traveler's checks of a desired amount. (Steps, n65, n66)

When the kind and number of traveler's checks to be issued are input as mentioned above, the amount which is required for the transaction is calculated by using the exchange rate and commission which were set by the center or by using the exchange rate set by the exchange rate setting unit 67 and the commission set by the commission setting unit 68. The particulars of the exchanging calculations are displayed on the display 1. The display 1 also guides to allow the customer to check whether the contents of the particulars displayed are correct or not. If they are correct, the customer inputs the acknowledgment. (Steps n67, n68)

The display 1 guides to allow the customer to insert the card. When the customer inserts the card into the card inserting port 5, the receiving process of the card is executed. (Steps n69, n70)

The card reader 64 reads the card data recorded in the card, that is, the data such as bank number, branch number, account number, ID number, and the like. The card data is stored into the card data areas $R_4$ to $R7$ in the RAM 63 (step n71). If any error occurred in the above processes, the error process is executed (step n72). If no error occurs, the display 1 guides to allow the customer to input the personal ID number (step n73). When the customer inputs the ID number (step n74), the communication with the center is started (step n75). The processes in steps n73 to n76 are the same as those in steps n42 to n45 in Fig. 9.

When a telegraphic message indicative of the permission of the transaction is received, the traveler's check issuing apparatus 80 feeds out the traveler's checks 83 from the stacker 81 in which the traveler's checks 83 of the designated amount (kind) were enclosed. The check numbers are printed onto the traveler's checks 83 by the printer 95. Then, the checks are conveyed to the traveler's check taking-out port 4A. (Step n77)

The check numbers which are printed by the printer 95 are the numbers stored in the areas $R_1$ to $R_3$ in the RAM 63. The numbers in the areas $R_1$ to $R_3$ are obviously updated every time they are printed.

The processes to print to the particulars, to deliver the particulars, to guide the card pulling-out operation, and the like are the same as those in the foregoing embodiment (steps n77 to n80).

In step n77, the numbers of the traveler's checks 83 fed out of the stackers 81 and the check numbers are stored into the traveler's check data areas $R_8$ to $R_{10}$ in the RAM 63. The exchange transaction data comprising the card dara which has already been stored in the card data areas $R_4$ to $R_7$ and the traveler's check data in the areas $R_8$ to $R_{10}$ is transmitted to the center through the transmitting apparatus 70 and stored into a file at the center and managed on the center side (step n81).

The processes to receive the particulars, to receive the checks, and the like which are subsequently executed by the customer (steps n82 to n86) are the same as those in steps n50 to n54 in Fig. 9.

The control operation of the control unit 61 for controlling the issuing operation of the traveler's checks from the stackers 81 (Nos. 1 to 3) will be finally explained with reference to Fig. 14.

In step n66 for the transaction process, since the kind and number of traveler's checks have already been input, when the transaction is permitted in the discriminating step n76 for the transaction process, the traveler's checks are issued (step n91).

If it is determined that the kind of money of the traveler's checks to be issued corresponds to that of the checks enclosed in the stacker of No. 1, the next traveler's check number of the No. 1 stacker read out of the data area $R_1$ in the RAM 63 and set to the printer 95 (steps n92, n93).

Then, one traveler's check 83 is fed out from the designated No. 1 stacker 81 (step n94).

In Fig. 11, by rotating the feeding rollers 85 and 86 by the rotational angle corresponding to one traveler's check, a sheet of check is fed out. Then, the check is conveyed to the first conveying path 89 by the conveying rollers 88.

When the fed check is sent from the first conveying path 89 to the second conveying path 91, the double-sheet feed-out sensor $S_{11}$ detects whether two or more sheets of traveler's checks 83 have been simultaneously fed out or not. If YES, these checks are returned and collected into the collecting box 94 by driving the distributing plate 93.

When a sheet of traveler's check 83 was correctly fed out and arrives at the printer 95, the set number is printed to the check 83 and the check is accumulated in the accumulating unit 96 (step n95).

After the feeding operation of one traveler's check was finished, the traveler's check number to be set to the print 95 is increased by "1" to set the next check number, and the next traveler's check number of the No. 1 stacker in the data area $R_1$ in the RAM 63 is also increased by "1" (step n96). The number of issued checks in the area $R_8$ of the No. 1 stacker is also increased by "1" and the printed number is stored (step n97).

A check is then made to see if all of the designated traveler's checks have completely been fed out from the No. 1 stacker or not. If NO, the processing routine is returned to step n94 and the next traveler's check is fed out.

By sequentially executing the feeding operation of the traveler's checks, when the designated number of traveler's checks in the No. 1 stacker have been fed out, a check is made to see if it is necessary to feed out traveler's checks from the stackers of Nos. 2 and 3 or not (step n99). If YES, the processes similar to those in the foregoing steps n93 to n98 are executed and the corresponding traveler's checks are fed out, respectively.

After all of the traveler's checks of the designated kinds have completely been fed out by executing the above processes, an end of feed-out signal is output (steps n100, n101).

The traveler's checks accumulated in the accumulating unit 96 are delivered in steps n84 and n85 for the transaction processes. That is, in Fig. 11 since the stopper 98 is opened at this time and the feeding rollers 97 are rotated in the delivery direction, so that the delivery operation is executed.

However, if the transaction is stopped (cancelled) before the checks are delivered, the traveler's checks in the accumulating unit 96 are collected to the collecting box 94.

That is, the feeding rollers 97 are rotated in the collecting direction, the distributing plate 93 is driven, and the traveler's checks are collected to the collecting box 94.

As described above, according to the embodiment, since the traveler's checks can be automatically issued and the traveler's check numbers can be registered by the transaction using a card, the working efficiency and the services can be improved. The automated operation can be realized.

Further, since the exchange rate is input from the center, it is unnecessary to set it on the terminal side and the working efficiency is improved. In addition, even in the apparatus which cannot handle small amount coins such as one yen, five yen, and the like, the transaction can be executed by using a card and a transaction range is widened.

In addition to a bank card (cash card), a credit card and other ID cards can be also used.

## Claims

1. An apparatus (10;10A) for exchanging money to valuable papers comprising:
valuable paper delivery means (60;80) for delivering designated kind and number of valuable papers;
paying means (64,66) for receiving the money;
conversion rate setting means (67) for setting a conversion rate between the valuable papers and the money; and
control means (61) for allowing said delivery means to deliver the designated kind and number of valuable papers in response to that the money of the amount which is determined on the basis of the designated kind and number of valuable papers and the conversion rate has been received by said paying means.

2. An apparatus according to claim 1, further comprising means (65) for inputting the kind and number of valuable papers to be delivered.

3. An apparatus according to claim 1 or 2, further comprising:
commission setting means (68) for setting a commission; and
said control means (61) for allowing said delivery means to deliver the designated kind and number of valuable papers in response to the operation such that the money of the amount which is determined on the basis of the designated kind and number of valuable papers, conversion rate and commission has been received by said paying means (64,66).

4. An apparatus according to any of claims 1 to 3, wherein a plurality of valuable papers are enclosed into a pack and packs are delivered from said delivery means (60;80) on a pack unit basis.

5. An apparatus according to any of claims 1 to 4, wherein said paying means is money processing means (66) for discriminating inserted cash and counting the total amount of the cash which was determined to be valid.

6. An apparatus according to any of claims 1 to 5, wherein said paying means (64,66) comprises:
means for authenticating an inserted card when predetermined conditions are satisfied on the basis of read data of the inserted card; and
means for confirming the receipt of money of the amount corresponding to the authorized card.

7. An apparatus according to any of claims 1 to 6, wherein said paying means is a center having a customer information file, and the center receives a predetermined amount of money by withdrawing from an account which is accessed by a card used.

8. An apparatus according to any of claims 1 to 7, wherein said exchanging apparatus is connected to a control center in an on-line manner.

9. An apparatus according to any of claims 1 to 8, wherein said conversion rate setting means is provided for a center connected to the exchanging apparatus in an on-line manner.

10. An apparatus according to any of claims 1 to 9, wherein said valuable paper delivery means (60;80) comprises:
a plurality of stackers (11;81) in which different kinds of valuable papers are respectively enclosed so as to be fed out;
first conveying means (16,17,18,19;89,90) for conveying the valuable papers fed out from said stackers;
second conveying means (35,36;91,92) which is arranged at a final end of said first conveying means and conveys the conveyed valuable papers to a taking-out port (4,4A) and
a collecting means (47,96) for collecting the valuable papers which were transported from the first conveying means to the second conveying means.

11. A delivery apparatus of valuable papers comprising:
a plurality of stackers (11) arranged in parallel, for respectively enclosing different kinds of valuable papers so that they can be fed out from feeding-out ports (13,14,15) formed in lower portions thereof;
a horizontal conveying apparatus (16,17,18,19) arranged horizontally, for conveying the valuable papers fed out of the feeding-out ports of the stackers in one direction by putting them thereon;
a vertical conveying apparatus (35,36) having a backet (21) which is vertically movably provided in a front edge portion in the conveying direction of said horizontal conveying apparatus (16,17,18) and conveys the valuable papers conveyed by the horizontal conveying apparatus to an upper taking-out port (4); and
a collecting apparatus (47,48) for taking out and collecting the valuable papers in the backet (21) of the vertical conveying apparatus.

12. An apparatus according to claim 11, wherein the packs in each of which the plurality of valuable papers are enclosed are accommodated in said stackers (11).

13. An apparatus according to claim 11 or 12, further comprising means for changing the position of the backet (21) in association with the vertical movement of the backet in a manner such that when the backet (21) is at a receiving position which faces the front edge portion in the conveying direction of said horizontal conveying apparatus (16,17,18,19) the backet (21) is set to a substantially horizontal position such that an opening of the backet (21) is directed in the lateral direction in the direction of said front edge portion, and when the backet (21) is at a delivery position corresponding to the taking-out port (4) the backet (21) is set to a substantially vertical position such that the opening of the backet (21) is directed upward.

14. An apparatus according to any of claims 11 to 13 wherein said collecting apparatus (47,48) comprises:
means (48) for pushing out the internal valuable papers from the backet (21) which is located at a collecting position lower than a receiving position facing the front edge portion in the conveying direction of the horizontal conveying apparatus and which is set to the substantially horizontal position; and
a collecting box (47) to receive the valuable papers which were pushed out.

15. An apparatus according to any of claims 1 to 14, further comprising:
a card reader (64) for reading out data recorded in an inserted card;
said delivery means (60;80) printing numbers onto the designated kind and number of valuable papers and delivering the valuable papers; and
means for storing the numbers of the valuable papers delivered by said delivery means and the card data read out by said card reader so as to correspond to one another.

16. An exchanging apparatus comprising:
a card reader (64) for reading data recorded in an inserted card;
means (65) for inputting the number of valuable papers to be delivered;
paying means (66) for receiving money;
means (60,80) for accommodating the valuable papers and from which the valuable papers can be fed out one by one;
printing means (69;95) for printing numbers onto the valuable papers fed out from said accommodating means;
means for storing the numbers printed onto the valuable papers by said printing means and the card data read out by said card reader so as to correspond to one another; and
control means (61) for controlling in a manner such that in response to that the money of the amount corresponding to an exchange value of the valuable papers of the number which was input by said input means (65) has been received by said paying means, the input number of valuable papers are fed out from the accommodating means, different numbers are printed onto the fed valuable papers by the printing means (69;95) the printed numbers and the card data are stored into said memory means so as to correspond to one another, and the printed valuable papers are delivered.

17. An apparatus according to claim 16, wherein said input means (65) inputs the kind and number of valuable papers, and the valuable papers of the kind and number designated by said input means are delivered after the numbers were printed thereon.

18. An apparatus according to claim 16 or 17, wherein said paying means (66) is money processing means for discriminating inserted cash and for counting the total amount of the cash which was decided to be valid.

19. An apparatus according to any of claims 16 to 18, wherein said paying means is a center having customer information files, and said center receives a predetermined amount of money by withdrawing the money from an account which is accessed by the card data of a card used, and said memory means stores the numbers of the valuable papers in correspondence to the account number in the card data.

20. An apparatus according to any of claims 16 to 19 further comprising exchange rate setting means (67) for setting an exchange rate between the valuable papers and the money.

# Fig.1

19042 EP Patentanwälte Kahler & Käck 27. Juni 1989

Fig.2

19042 EP Patentanwälte Kahler & Käck 27. Juni 1989

# Fig.3

19042 EP Patentanwälte Kahler & Käck 27. Juni 1989

Fig.4

Fig.6

# Fig.5

19042 EP Patentanwälte Kahler & Käck 27. Juni 1989

19042 EP Patentanwälte Kahler & Käck 27. Juni 1989

## Fig. 7

64 — CARD READER

65 — TOUCH PANEL

66 — MONEY PROCESSING UNIT

67 — EXCHANGE RATE SETTING UNIT

68 — COMMISSION SETTING UNIT

61

CONTROL UNIT (CPU)

ROM — 62

RAM — 63

TC DELIVERY APPARATUS (ISSUING APPARATUS) — 60(80)

PRINTER UNIT — 69(95)

DISPLAY — 1

70

TRANSMITTING UNIT → TO CENTER

# Fig.8

START

B → SELECT ENGLISH/JAPANESE GUIDANCES — n1

n2 — SELECT ENGLISH OR JAPANESE GUIDANCE

n3 — SELECT KIND OF TRANSACTION

n4 — SELECT TRANSACTION KIND

n5 — INPUT NUMBER OF TRAVELER'S CHECKS

n6 — INPUT NUMBER OF TCs

n7 — CHECK SPECIFICATION OF CALCULATIONS

n8 — CONFIRM SPECIFICATION OF CALCULATIONS

n9 — INSERT BILLS OF YEN

n10 — ACCEPT YEN BILLS

n11 — ERROR? — Y → ERROR PROCESS — N

n12 — CHECK AMOUNT OF MONEY

n13 — CONFIRM AMOUNT OF MONEY → A

A → PRINT JOURNAL AND DELIVER TCs AND CHANGE — n14

n15 — ERROR? — Y → ERROR PROCESS — N

n16 — PULL OUT PARTICULAR

n17 — WAIT UNTIL PARTICULAR IS PULLED OUT

n18 — TAKE OUT CHANGE

n19 — WAIT UNTIL CHANGE IS TAKEN OUT

n20 — TAKE OUT TRAVELER'S CHECKS

n21 — WAIT UNTIL TCs ARE TAKEN OUT

n22 — THANK YOU

n23 — ACCOMMODATE INSERTED BILLS → B

19042 EP Patentanwälte Kahler & Käck 27. Juni 1989

Fig.9

START — n31

SELECT ENGLISH/JAPANESE GUIDANCES

n32 — SELECT ENGLISH OR JAPANESE GUIDANCE

n33 — SELECT KIND OF TRANSACTION

n34 — SELECT TRANSACTION KIND

n35 — INPUT NUMBER OF TRAVELER'S CHECKS

n36 — INPUT NUMBER OF TCs

n37 — CHECK SPECIFICATION OF CALCULATIONS

n38 — CONFIRM SPECIFICATION OF CALCULATIONS

n39 — INSERT CARD

n40 — ACCEPT CARD

ERROR? —Y→ ERROR PROCESS

n41 — N

n42 — INPUT ID NUMBER

n43 — INPUT ID NUMBER

n44 — COMMUNICATE WITH CENTER

n45 — TRANSACTION OK? —N→ ERROR PROCESS

Y → C

C

PRINT JOURNAL AND DELIVER TCs — n46

ERROR? —Y→ ERROR PROCESS

n47 — N

n48 — PULL OUT CARD

n49 — WAIT UNTIL CARD IS PULLED OUT

n50 — PULL OUT PARTICULAR

n51 — WAIT UNTIL PARTICULAR IS PULLED OUT

n52 — TAKE OUT TRAVELER'S CHECKS

n53 — WAIT UNTIL TCs ARE TAKEN OUT

THANK YOU

n54

D

19042 EP Patentanwälte Kahler & Käck 27. Juni 1989

Fig. 10

Fig. 11

# Fig.12

| | |
|---|---|
| NEXT TC NUMBER OF No. 1 STACKER | R1 |
| NEXT TC NUMBER OF No. 2 STACKER | R2 |
| NEXT TC NUMBER CF No. 3 STACKER | R3 |

| | |
|---|---|
| CARD DATA | |
| BANK NUMBER | R4 |
| BRANCH NUMBER | R5 |
| ACCOUNT NUMBER | R6 |
| OTHER DATA | R7 |
| TRAVELER'S CHECK DATA | |
| NUMBER OF TCs ISSUED AND CHECK NUMBERS THEREOF IN No. 1 STACKER | R8 |
| NUMBER OF TCs ISSUED AND CHECK NUMBERS THEREOF IN No. 2 STACKER | R9 |
| NUMBER OF TCs ISSUED AND CHECK NUMBERS THEREOF IN No. 3 STACKER | R10 |

19042 EP Patentanwälte Kahler & Käck 27. Juni 1989

Fig.13

START

F

SELECT
ENGLISH/JAPANESE
GUIDANCES — n61

SELECT
ENGLISH OR JAPANESE
GUIDANCE — n62

SELECT
KIND OF
TRANSACTION — n63

SELECT
TRANSACTION KIND — n64

INPUT NUMBER OF
TRAVELER'S CHECKS — n65

INPUT
NUMBER OF TCs — n66

CHECK
SPECIFICATION OF
CALCULATIONS — n67

CONFIRM
SPECIFICATION OF
CALCULATIONS — n68

INSERT CARD — n69

ACCEPT CARD — n70

STORE CARD DATA — n71

ERROR? — n72 ——Y——> ERROR PROCESS
N

INPUT
ID NUMBER — n73

INPUT ID NUMBER — n74

E

E

COMMUNICATE
WITH CENTER — n75

TRANSACTION
OK? — n76 ——N——> ERROR PROCESS
Y

PRINT JOURNAL
AND DELIVER TCs — n77

ERROR? ——Y——> ERROR PROCESS
n78    N

PULL OUT CARD — n79

WAIT UNTIL CARD
IS PULLED OUT — n80

TRANSMIT CARD
DATA AND TC DATA
TO CENTER — n81

PULL OUT
PARTICULAR — n82

WAIT UNTIL
PARTICULAR IS
PULLED OUT — n83

TAKE OUT
TRAVELER'S CHECKS — n84

WAIT UNTIL TCs
ARE TAKEN OUT — n85

THANK YOU — n86

F

19042 EP Patentanwälte Kahler & Käck 27. Juni 1989

# Fig.14

```
            ( START )
               │
    ┌──────────────────────┐
    │     WAIT FOR         │
    │  DELIVERY REQUEST    │──n91
    └──────────────────────┘
               │
```

WAIT FOR DELIVERY REQUEST ──n91

DELIVERY FROM No.1 STACKER ? ──n92

DELIVERY FROM No.2 STACKER ? ──n99

(DELIVERY FROM No. 3 STACKER)

SET NEXT TC NUMBER ──n93

FEED OUT ONE TC ──n94

PRINT TC NUMBER ──n95

NEXT TC NUMBER +1 ──n96

NUMBER OF TCs ISSUED +1, STORE PRINTED NUMBER ──n97

No.1 STACKER FINISHED? ──n98

FEED OUT TCs AND PRINT TC NUMBERS

FEED OUT TCs AND PRINT TC NUMBERS

ALL STACKERS FINISHED? ──n100

INFORM END OF DELIVERY ──n101

END

19042 EP Patentanwälte Kahler & Käck 27. Juni 1989